(19) Europäisches Patentamt
European Patent Office
Office européen des brevets

(11) Veröffentlichungsnummer: **0 150 256 B1**

# (12) EUROPÄISCHE PATENTSCHRIFT

(45) Veröffentlichungstag der Patentschrift: **18.03.92**

(51) Int. Cl.⁵: **C01B 33/34**

(21) Anmeldenummer: **84108958.4**

(22) Anmeldetag: **28.07.84**

## (54) Verfahren zur Herstellung von kristallinen ZSM-5- oder ZSM-11-Zeolithen.

(30) Priorität: **27.01.84 DE 3402842**

(43) Veröffentlichungstag der Anmeldung:
**07.08.85 Patentblatt 85/32**

(45) Bekanntmachung des Hinweises auf die Patenterteilung:
**18.03.92 Patentblatt 92/12**

(84) Benannte Vertragsstaaten:
**DE FR GB NL**

(56) Entgegenhaltungen:
**EP-A- 142 347**
**DE-A- 2 017 807**
**DE-A- 2 147 067**
**DE-A- 2 511 975**
**DE-A- 3 004 060**
**US-A- 3 886 094**

(73) Patentinhaber: **SÜD-CHEMIE AG**
**Lenbachplatz 6**
**W-8000 München 2(DE)**

(72) Erfinder: **Kacirek, Hartmut, Dr. Dipl.-Chem.**
**Finkenried 35**
**W-2000 Norderstedt(DE)**
Erfinder: **Meyer, Andreas, Dipl.-Chem.**
**Kiwittsmoor 40/01**
**W-2000 Hamburg 62(DE)**

(74) Vertreter: **Reitzner, Bruno, Dr.**
**Patentanwälte Dipl.-Ing. R. Splanemann Dr. B. Reitzner Tal 13**
**W-8000 München 2(DE)**

EP 0 150 256 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von kristallinen ZSM-5- oder ZSM-11-Zeolithen. Bei diesen Zeolithen handelt es sich Alumosilicate, bei denen das Si/Al-Verhältnis im allgemeinen ≧ 10 ist, wobei im Extremfall der Aluminiumgehalt gegen Null gehen kann. Die "Alumosilicate" ohne Aluminium bzw. mit einem geringen Aluminiumgehalt werden als "Silikalite" bezeichnet.

Die kristallinen ZSM-5- oder ZSM-11-Zeolithe gewinnen im zunehmenden Maße an Bedeutung als Katalysatoren und Katalysatorträger.

ZSM-5-Zeolithe können beispielsweise nach der US-A-3 702 866 aus Mischungen von reaktivem $SiO_2$ und $Al_2O_3$ durch hydrothermale Kristallisation in Gegenwart von Natriumionen und quaternären Ammoniumverbindungen, wie Tetrapropylammoniumsalzen, hergestellt werden. Ein Nachteil dieses und ähnlicher Verfahren besteht darin, daß die Kristallisationszeiten bei wirtschaftlich interessanten Konzentrationen des Tetrapropylammonium-Ions sehr lang sind. Weiterhin entstehen bei diesen Verfahren ZSM-5-Kristalle mit unterschiedlicher Größe, was für eine Anwendung als Katalysatoren nachteilig ist.

Die DE-A-25 11 975 betrifft ein Verfahren zur Herstellung Zeolithen mit offener Gitterstruktur, wie Offretit durch hydrothermale Kristallisation einer wäßrigen Mischung mit einem Gehalt an einem Siliciumdioxidlieferanten, einem Aluminiumoxidlieferanten und einem Alkalihydroxid in Gegenwart eines organischen Templations, wobei zuerst eine Mischung mit einem Gehalt an organischen Templationen hergestellt, die Mischung bei erhöhter Temperatur gealtert und die so erhaltene Aufschlämmung als keimbildende Aufschlämmung einer Zeolithsynthesemischung zugesetzt und diese hydrothermal kristallisieren gelassen wird. Die Aufschlämmung soll ein Atomverhältnis Si : Al von etwa 1 : 1 bis 10 : 1 aufweisen. Bei diesen Verhältnissen können keine ZSM-5- und ZSM-11-Zeolithe in reiner Form entstehen.

Der Erfindung liegt die Aufgabe zugrunde, ein Verfahren zur Herstellung von kristallinen ZSM-5- oder ZSM-11-Zeolithen zur Verfügung zu stellen, das frei von den Nachteilen des Standes der Technik ist. Insbesondere soll die Geschwindigkeit der hydrothermalen Kristallisation erheblich gesteigert und gleichzeitig Einfluß auf die Kristallgröße des Endproduktes, die im Bereich von 0,1 bis 100 µm liegt, genommen werden.

Die Erfindung betrifft somit ein Verfahren zur Herstellung von kristallinen ZSM-5- und ZSM-11-Zeolithen mit einem Si/Al-Atomverhältnis von ≧ 10 durch hydrothermale Kristallisation aus einem Reaktionsansatz, der in wäßrig-alkalischem Medium $Si0_2$ und $Al_20_3$ bzw. deren hydratisierte Derivate oder Alkali-Silicate und -Aluminate, Kristallisationsbeschleuniger und quaternäre Ammoniumverbindungen, ein Alkylendiamin oder ein Gemisch aus Alkoholen mit Ammoniak enthält; das Verfahren ist dadurch gekennzeichnet, daß man dem Reaktionsansatz als Kristallisationsbeschleuniger ein gealtertes, aber noch roentgenamorphes Alumosilicat-Keimbildungsgel mit einem Si/Al-Atomverhältnis von ≧ 20 zusetzt.

Hierbei braucht das Si/Al-Atomverhältnis im Keimbildungsgel nicht unbedingt mit dem im kristallinen Endprodukt übereinzustimmen. Ferner kann der Al-Gehalt im Keimbildungsgel wie im kristallinen Endprodukt gegen 0 gehen.

Durch den Zusatz des Keimbildungsgels kann die Geschwindigkeit der Kristallisation erheblich gesteigert werden; gleichzeitig kann über die Menge des zugesetzten Keimbildungsgels Einfluß auf die Kristallgröße des kristallinen Endproduktes genommen werden. Die Erhöhung der Kristallisationsgeschwindigkeit erlaubt es weiterhin, die Synthese bei niedrigen Temperaturen ablaufen zu lassen und statt des verhältnismäßig kostspieligen Tetrapropylammoniumsalzes billigere und leichter zugängliche organische Stickstoffverbindungen zu verwenden oder auf die organischen Substanzen ganz zu verzichten.

Eine Erhöhung der Kristallisationsgeschwindigkeit ist im allgemeinen durch eine Erhöhung der Keimbildungsgeschwindigkeit und/oder der Wachstumsgeschwindigkeit der Kristalle zu erreichen. Der Zusatz von kristallinen Keimen zur Synthese von ZSM-5 ist an sich bekannt (vgl. z.B. US-A-4 175 114, DE-A-29 35 123). Die vorliegende Erfindung beruht im Gegensatz dazu auf der Anwendung eines gealterten, aber noch nicht kristallinen, roentgenamorphen Keimbildungsgels mit dem vorstehend angegebenen Si/Al-Atomverhältnis.

Vorzugsweise verwendet man ein gealtertes Keimbildungsgel der Zusammensetzung (auf molarer Basis) $HO^-/Si0_2$ = 0,05 bis 1,0, quaternäre Ammoniumverbindung/$Si0_2$ = 0,0 bis 2,0, vorzugsweise 0,01 bis 2,0, $H_20/Si0_2$ = 10 bis 1000. Hierbei stellt die quaternäre Ammoniumverbindung vorzugsweise ein Tetrapropylammoniumsalz ($TPA^+$), insbesondere das Bromid, oder das Tetrahydropropylammoniumhydroxid (TPAOH) dar. Nach einer Abwandlung des vorstehend beschriebenen Verfahrens kann man statt der quaternären Ammoniumverbindungen billigere und leichter zugängliche Stickstoffverbindungen, z.B. Amine, vorzugsweise ein Alkylendiamin, oder Gemische aus Alkoholen mit Ammoniak, verwenden. Es können ein- oder mehrwertige Alkohole verwendet werden.

Je nach der dem Reaktionsansatz zugesetzten Menge an Keimbildungsgel werden ZSM-5- oder ZSM-11--Kristalle unterschiedlicher Größe erhalten. Mit kleinen Mengen an Keimbildungsgel (4 bis 20 Gew.-%, bezogen auf den $Si0_2$-Gehalt des fertigen Reaktionsansatzes) erhält man Kristalle im Bereich von 10 bis 100 µm; mit größeren Mengen Keimbildungsgel (20 bis 40 Gew.-%) erhält man kleinere Kristalle im Bereich von 0,5 bis 10 µm. Im allgemeinen liegen die erhaltenen Kristallitgrößen zwischen etwa 0,1 und 100 µm, wobei das gealterte Keimbildungsgel üblicherweise in Mengen von 4 bis 40 Gew.-%, vorzugsweise in Mengen von 15 bis 25 Gew.-%, bezogen auf den $SiO_2$-Gehalt des fertigen Reaktionsansatzes zugesetzt wird. Der Zusatz eines alterten Keimbildungsgels hat gegenüber der Impfung durch kristalline Keime einen entscheidenden Vorteil, der sich aus kinetischen Untersuchungen ergibt und in der beigefügten Zeichnung dargestellt ist. Für einen Ansatz ohne Keime beobachtet man eine Induktionsperiode, die je nach den Bedingungen 10 bis 60 Stunden betragen kann. Nach dieser Induktionsperiode erfolgt ein relativ schnelles Kristallwachstum. Bei Zusatz von kristallinen Keimen beginnt das Kristallwachstum sofort, setzt sich dann aber mit einer geringeren Wachstumsgeschwindigkeit fort. Zur Erzielung einer möglichst großen Wachstumsgeschwindigkeit sind sehr kleine Keime erforderlich. Das erfindungsgemäß verwendete, gealterte Keimbildungsgel erhöht die Kristallisationsgeschwindigkeit und verkürzt die Induktionsperiode je nach Alterungszeit. Das Altern der Keimbildungsgele kann bei Raumtemperatur oder bei leicht erhöhter Temperatur bei atmosphärischem Druck durchgeführt werden und erfordert keinen zusätzlichen Energieaufwand. Üblicherweise wird das Keimbildungsgel bei atmosphärischem Druck bei 15 bis 100 °C vorzugsweise bei 20 bis 60 °C, über 2 Stunden bis 100 Tage, vorzugsweise über 10 bis 50 Tage, gealtert.

Bei der Anwendung der erfindungsgemäßen Keimbildungsgele verkürzen sich die Kristallisationszeiten um 40 bis 90 %. Die stark verkürzten Kristallisationszeiten haben den Vorteil, daß bei einer gegebenen Anlage größere Durchsätze erzielt werden können und somit eine wirtschaftliche Herstellung möglich ist.

Weiterhin läßt sich der Gehalt an den üblicherweise verwendeten Tetrapropylammoniumsalzen im Reaktionsansatz senken, wenn erfindungsgemäß gealterte Keimbildungsgele zugesetzt werden. Die Anwendung der gealterten Keimbildungsgele bringt außerdem den Vorteil, daß durch die starke Verkürzung der Kristallisationszeiten eine kontinuierliche und damit auch eine wesentlich wirtschaftlichere Herstellung der kristallinen Alumosilicate erreicht wird. So beträgt z.B. die Kristallisationszeit bei einer Reaktionstemperatur von 150 °C nur noch 6 Stunden. Im allgemeinen kann bei Temperaturen zwischen 40 und 200 °C gearbeitet werden.

Vorzugsweise setzt man das gealterte Keimbildungsgel Reaktionsansätzen mit folgender Zusammensetzung (auf molarer Basis) zu: $SiO_2/Al_2O_3 \geq 5$, $HO^-/SiO_2 = 10^{-10}$ bis 1,0, quaternäre Ammoniumverbindung/$SiO_2$ = 0,01 bis 2,0, $H_2O/SiO_2$ = 0,7 bis 3000, Me/$SiO_2$ = 0,3 bis 3,0, wobei Me ein Alkali- oder Erdalkalimetall-Kation darstellt. Ferner kann man dem Reaktionsansatz zusätzlich zu dem gealterten Keimbildungsgel ein Alkalifluorid, vorzugsweise Natriumfluorid oder Ammoniumfluorid, zusetzen, wobei das Molverhältnis $F^-/SiO_2$ 0,4 bis 1,5 betragen kann.

Die Erfindung ist durch die nachstehenden Beispiele in nicht einschränkender Weise erläutert.

Vergleichsbeispiel A

Herstellung eines Silikalits

17,2 g amorphe Kieselsäure der Zusammensetzung 1 $SiO_2 \cdot 0,5\ H_2O$ wurden mit 1,1 g NaOH, 3,36 g TPA-Br und 45 g Wasser vermengt. Der Reaktionsansatz hatte die molare Zusammensetzung:

1 $SiO_2 \cdot$ 0,11 NaOH$\cdot$ 0,05 TPA-Br$\cdot$ 10,5 $H_2O$

Bei einer Kristallisationstemperatur von 85 °C wurde nach 140 Std. Silikalit mit einem relativen Kristallisationsgrad von 100 % (ermittelt aus dem Röntgendiagramm) erhalten.

Beispiel 1

Herstellung eines kristallinen Alumosilicats vom Silikalittyp

16,3 g amorphe Kieselsäure der Zusammensetzung 1 $SiO_2 \cdot 0,5\ H_2O$ wurden mit 0,9 g NaOH, 3,2 g TPA-Br, 42,7 g Wasser und 3,6 g Keimbildungsgel vermengt. Zur Herstellung des Keimbildungsgels wurden 6,9 g amorphe Kieselsäure der Zusammensetzung 1 $SiO_2 \cdot 0,5\ H_2O$ mit 1,6 g NaOH, 1,3 g TPA-Br und 18 g $H_2O$ unter Rühren bei Raumtemperatur vereinigt und 46 Std. gealtert. Das Keimbildungsgel hat die nachstehende molare Zusammensetzung:

$1\ SiO_2 \cdot 0{,}39\ NaOH \cdot 0{,}05\ TPA\text{-}Br \cdot 10{,}5\ H_2O$

Der gesamte Reaktionsansatz hatte somit die Zusammensetzung:

$1\ SiO_2 \cdot 0{,}11\ NaOH \cdot 0{,}05\ TPA\text{-}Br \cdot 10{,}5\ H_2O.$

Bei einem Zusatz von 3,6 g dieses Keimbildungsgels mit einem Feststoffgehalt von 32 Gew.% beträgt seine Menge, bezogen auf den gesamten Feststoff im Ansatz, 5,7 Gew.%. Bezogen auf $SiO_2$ im Ansatz, liegt der Anteil des Keimbildungsgels bei 24 Gew.%.

Bei einer Kristallisationstemperatur von 85 °C wurde nach 70 Std. ein kristallines Alumosilicat vom Silikalittyp mit dem gleiche Kristallisationsgrad wie im Vergleichsbeispiel A erhalten. Dies bedeutet eine Zeitersparnis von 50 %.

Beispiel 2

Herstellung eines kristallinen Alumosilicats vom Silikalittyp

16,3 g amorphe Kieselsäure der Zusammensetzung $1\ SiO_2 \cdot 0{,}5\ H_2O$ wurden mit 0,9 g NaOH, 3,2 g TPA-Br, 42,7 g Wasser und 3,6 g des in Beispiel 1 beschriebenen Keimbildungsgels vermengt. Das Keimbildungsgel war 1200 Std. bei Raumtemperatur gealtert worden.

Der gesamte Reaktionsansatz besaß somit die Zusammensetzung:

$1\ SiO_2 \cdot 0{,}11\ NaOH \cdot 0{,}05\ TPA\text{-}Br \cdot 10{,}5\ H_2O$

Bei einer Kirstallisationstemperatur von 85 °C wurde nach einer Kristallisationszeit von 25 Std. ein Silicat des ZSM-5-Typs (Silikalit) mit dem gleichen Kristallisationsgrad wie im Vergleichsbeispiel A erhalten. Dies bedeutet eine Zeitersparnis von etwa 82 %.

Vergleichsbeispiel B

Herstellung eines Zeolithen vom ZSM-5-Typ

17,2 amorphe Kieselsäure der Zusammensetzung $1\ SiO_2 \cdot 0{,}5\ H_2O$ wurden mit 0,71 g Aluminatlösung (1000 g Lösung enthalten 100 g NaOH, 205 g $NaAlO_2$ und 695 g Wasser), 1,03 g NaOH, 3,4 g TPA-Br und 44,5 g Wasser vermengt. Der Reaktionsansatz hatte die Zusammensetzung:

$1\ SiO_2 \cdot 0{,}007\ AlO_2^- \cdot 0{,}11\ NaOH \cdot 0{,}05\ TPA\text{-}Br \cdot 10{,}5\ H_2O$

Bei einer Kristallisationstemperatur von 90 °C wurde nach 130 Std. ZSM-5 mit einem relativen Kristallisationsgrad von 100 % (ermittelt aus Röntgenbeugungsdiagrammen) erhalten.

Beispiel 3

Herstellung von kristallinem Alumosilicat des ZSM-5-Typs mit Hilfe von aluminiumfreiem Keimbildungsgel

16,3 g amorphe Kieselsäure der Zusammensetzung $1\ SiO_2 \cdot 0{,}5\ H_2O$ wurden mit 0,7 g Aluminatlösung (1000 g Lösung enthielten 100 g NaOH, 205 g $NaAlO_2$ und 695 g Wasser), 0,83 g NaOH, 3,4 g TPA-Br, 42,2 g Wasser und 3,6 g des Keimbildungsgels nach Beispiel 1 vermengt. Das Keimbildungsgel war 77 Std. bei Raumtemperatur gealtert worden.

Der gesamte Reaktionsansatz hatte somit die Zusammensetzung;

$1\ SiO_2 \cdot 0{,}007\ AlO_2^- \cdot 0{,}11\ NaOH \cdot 0{,}05\ TPA\text{-}Br \cdot 10{,}5\ H_2O$

Bei einer Kristallisationstemperatur von 90 °C wurde nach einer Kristallisationszeit von 70 Std. ein Alumosilicat des ZSM-5-Typs mit dem gleichen Kristallisationsgrad wie die Probe nach dem Vergleichsbeispiel B erhalten. Dies bedeutet eine Zeitersparnis von etwa 41 %.

Beispiel 4

Herstellung von kristallinen Alumosilicaten des ZSM-5-Typs mit Hilfe von aluminiumfreiem Keimbildungsgel

16,3 amorphe Kieselsäure der Zusammensetzung 1 $SiO_2$ • 0,5 $H_2O$ wurden mit 0,7 g Aluminatlösung (1000 g der Lösung enthielten 100 g NaOH, 205 g $NaAlO_2$ und 695 g Wasser), 0,83 g NaOH, 3,4 g TPA-Br, 42,2 g Wasser und 3,6 g Keimbildungsgel nach Beispiel 1 vermengt. Das Keimbildungsgel war 1200 Std. bei Raumtemperatur gealtert worden.

Bei einer Kristallisationstemperatur von 90 °C wurde nach einer Kristallisationszeit von 20 Std. ein Alumosilicat des ZSM-5-Typs mit dem gleichen Kristallisationsgrad das Produkt nach Vergleichsbeispiel B erhalten. Dies bedeutet eine Zeitersparnis von etwa 85 %.

Vergleichsbeispiel C

Herstellung von kristallinem Alumosilicat des ZSM-5-Typs unter Verwendung von Ethylendiamin

15,5 g amorphe Kieselsäure der Zusammensetzung 1 $SiO_2$ • 0,1 $H_2O$ wurden mit 1,0 g Aluminatlösung (1000 g Lösung enthielten 100 g NaOH, 205 g $NaAlO_2$ ind 695 g Wasser), 2,9 g NaOH, 15,0 g Ethylendiamin und 210 g Wasser vermengt. Der Reaktionsansatz hatte die Zusammensetzung:

1 $SiO_2$ • 0,01 $AlO_2^-$ • 0,3 NaOH • 1 Eda • 47 $H_2O$

Nach 140 Std. bei einer Kristallisationstemperatur von 150 °C wurde ein Alumosilicat des ZSM-5-Typs mit einem relativen Kristallisationsgrad von 60 % erhalten.

Beispiel 5

Herstellung von kristallinem Alumosilicat des ZSM-5-Typs unter Verwendung von Ethylendiamin und Keimbildungsgel

14,4 g amorphe Kieselsäure der Zusammensetzung 1 $SiO_2$ • 0,1 $H_2O$ wurden mit 1,0 g Aluminatlösung (1000 g der Lösung enthielten 100 g NaOH, 205 g $NaAlO_2$ und 695 g Wasser), 2,6 g NaOH, 15,0 g Ethylendiamin, 206,5 g Wasser und 5,0 g des Keimbildungsgels nach Beispiel 1 vermengt. Das Keimbildungsgel war 54 Tage bei Raumtemperatur gealtert worden. Der gesamte Reaktionsansatz hatte somit die Zusammensetzung:

1 $SiO_2$ • 0,01 $AlO_2^-$ • 0,3 NaOH • 1 Eda • 47 $H_2O$

Nach 140 Std. bei einer Kristallisationstemperatur von 150 °C wurde ein Alumosilicat des ZSM-5-Typs mit einem relativen Kristallisationsgrad von 80 % erhalten.

Vergleichsbeispiel D

Herstellung von kristallinem Alumosilicat des ZSM-5-Typs unter Verwendung von n-Butanol und Ammoniak

15,5 g amorphe Kieselsäure der Zusammensetzung 1 $SiO_2$ • 0,1 $H_2O$ wurden mit 1,0 g Aluminatlösung (1000 g Lösung enthielten 100 g NaOH, 205 g $NaAlO_2$ und 695 g Wasser), 2,4 g NaOH, 11,5 g n-Butanol, 2,9 g Ammoniak-Lösung (min. 25%ig) und 94 g Wasser vermengt. Der Reaktionsansatz hatte die Zusammensetzung:

1 $SiO_2$ • 0,01 $AlO_2^-$ • 0,25 NaOH • 0,62 $C_4H_9OH$ • 0,17 $NH_3$ • 21 $H_2O$

Nach 72 Std. bei einer Kristallisationstemperatur von 150 °C wurde ein Alumosilicat des ZSM-5-Typs mit einem relativen Kristallisationsgrad von 60 % erhalten.

Beispiel 6

Herstellung von kristallinem Alumosilicat des ZSM-5-Typs unter Verwendung von n-Butanol, Ammoniak und Keimbildungsgel

14,4 g amorphe Kieselsäure der Zusammensetzung 1 $SiO_2$ • 0,1 $H_2O$ wurden mit 1,0 g Aluminatlösung (1000 g Lösung enthielten 100 g NaOH, 205 g $NaAlO_2$ und 695 g Wasser), 2,1 g NaOH, 11,5 g n-Butanol, 2,9 g Ammoniak-Lösung (min. 25%ig), 90,5 g Wasser und 5,0 g des Keimbildungsgels vom Beispiel 1 vermengt. Das Keimbildungsgel war 60 Tage bei Raumtemperatur gealtert worden.

Der gesamte Raktionsansatz hatte somit die Zusammensetzung:

1 $SiO_2$ • 0,01 $AlO_2^-$ • 0,25 NaOH • 0,62 $C_4H_9OH$ • 0,17 $NH_3$ • 21 $H_2O$

Nach 20 Std. bei einer Kristallisationstemperatur von 150 °C wurde ein Alumosilicat vom ZSM-5-Typ mit dem relativen Kristallisationsgrad des Produkts nach dem Vergleichsbeispiel B erhalten. Dies bedeutet eine Erhöhung der Kristallinität und zusätzlich eine Verkürzung der Kristallisationszeit.

Vergleichsbeispiel E

Herstellung von kristallinem Alumosilicat des ZSM-5-Typs in Abwesenheit von organischen Substanzen

15,5 g amorphe Kieselsäure der Zusammensetzung 1 $SiO_2$ • 0,1 $H_2O$ wurden mit 1,0 g Aluminatlösung (1000 g Lösung enthielten 100 g NaOH, 205 g $NaAlO_2$ und 695 g Wasser), 1,5 g NaOH und 170,3 g Wasser vermengt. Der Reaktionsansatz hatte die Zusammensetzung:

1 $SiO_2$ • 0,01 $AlO_2^-$ • 0,16 NaOH • 40 $H_2O$

Nach 72 Std. bei einer Kristallisationstemperatur von 200 °C wurde ein Alumosilicat des ZSM-5-Typs mit einem relativen Kristallisationsgrad von 5 - 10 % erhalten.

Beispiel 7

Herstellung von kristallinem Alumosilicat des ZSM-5-Typs in Abwesenheit von organischen Substanzen und unter Verwendung des Keimbildungsgels

14,4 g amorphe Kieselsäure der Zusammensetzung 1 $SiO_2$ • 0,1 $H_2O$ wurden mit 1,0 g Aluminatlösung (1000 g Lösung enthielten 100 g NaOH, 205 g $NaAlO_2$ und 695 g Wasser), 1,2 g NaOH, 166,8 g Wasser und 5,0 g des Keimbildungsgels von Beispiel 1 vermengt. Das Keimbildungsgel war 67 Tage bei Raumtemperatur gealtert worden.

Der gesamte Reaktionsansatz hatte somit die Zusammensetzung:

1 $SiO_2$ • 0,01 $AlO_2^-$ • 0,16 NaOH • 40 $H_2O$ (• 0,0009 TPA-Br)

(Anm.: Das TPA-Br stammt aus dem Keimbildungsgel nach Beispiel 1).

Nach 72 Std. bei einer Kristallisationstemperatur von 200 °C wurde ein Alumosilicat des ZSM-5-Typs mit einem relativen Kristallisationsgrad von 15 - 20 % erhalten.

Vergleichsbeispiel F

ZSM-11-Herstellung

15,5 g amorphe Kieselsäure der Zusammensetzung 1 $SiO_2$ • 0,1 $H_2O$ wurden mit 1,1 g NaOH, 4,6 g Tetrabutylammoniumjodid (TBA-J) und 46,9 g Wasser vermengt. Der Reaktionsansatz hatte die Zusammensetzung:

1 $SiO_2$ • 0,11 NaOH • 0,05 TBA-J • 10,5 $H_2O$

Nach 240 Std. bei einer Kristallisationstemperatur von 90 °C wurde ein ZSM-11 mit einem relativen Kristallisationsgrad von 100 % (ermittelt aus Röntgenbeugungsdiagrammen) erhalten.

Beispiel 8

Herstellung von kristallinem Alumosilicat des ZSM-11-Typs unter Verwendung von Keimbildungsgel

14,4 g amorphe Kieselsäure der Zusammensetzung 1 $SiO_2$ • 0,1 $H_2O$ wurden mit 0,8 g NaOH, 4,6 g TBA-J, 43,4 g Wasser und 5,0 g des Keimbildungsgels von Beispiel vermengt. Das Keimbildungsgel war 14 Tage bei Raumtemperatur gealtert worden.

Der gesamte Reaktionsansatz hatte somit die Zusammensetzung:

1 $SiO_2$ • 0,11 NaOH • 0,05 TBA-J • 10,5 $H_2O$ (• 0,0009 TPA-Br)

(Anm.: das TPA-Br stammte aus dem Keimbildungsgel) Nach 115 Std. bei einer Kristallisationstemperatur von 90 °C wurde ein Alumosilicat des ZSM-11-Typs mit dem gleichen Kristallisationsgrad wie das Produkt nach Vergleichsbeispiel F erhalten. Dies bedeutet eine Zeitersparnis von etwa 52 %.

Beispiel 9

Herstellung von aluminiumfreiem kristallinem Silicat des ZSM-5-Typs (Silikalit) unter Verwendung von Keimbildungsgel und in Anwesenheit von $NH_4F$

16,3 g amorphe Kieselsäure der Zusammensetzung 1 $SiO_2$ • 0,5 $H_2O$ wurden mit 0,9 g NaOH, 3,2 g TPA-Br, 4,6 g Ammoniumfluorid ($NH_4F$), 42, 7 g Wasser und 3,6 g des Keimbildungsgels nach Beispiel 1 vermengt. Das Keimbildungsgel war 4 Tage bei Raumtemperatur gealtert worden.

Der gesamte Reaktionsansatz hatte somit die Zusammensetzung:

1 $SiO_2$ • 0,11 NaOH • 0,05 TPA-Br • 0,5 $NH_4F$ • 10,5 $H_2O$

Nach 50 Std. bei einer Kristallisationstemperatur von 90 °C wurde ein grobkristallines Alumosilicat des Silikalittyps (Teilchengröße etwa 40 bis 60 µm) mit einem relativen Kristallisationsgrad von 100 % erhalten.

Erläuterungen zur Zeichnung

| Silikalitansatz: | |
|---|---|
| $OH^-/SiO_2$ = | 0,1 |
| TPA-Br/$SiO_2$ = | 0,05 |
| $H_2O/SiO_2$ = | 10,5 |
| Reaktionstemperatur = | 90 °C |

| | |
|---|---|
| Kurve A | ohne Keimbildungsgel; |
| Kurve B | mit kristallinen Keimen+; |
| Kurve C | mit Keimbildungsgel++ (Alterungszeit des Gels: 3 Tage) |
| Kurve D | mit Keimbildungsgel** (Alterungszeit des Gels: 50 Tage) |

+ Die verwendeten kristallinen Keime wurden aus folgenden Substanzen erhalten: $SiO_2/AlO_2^-$ = 140, $OH^-/SiO_2$ = 0,25, TPA-Br/$SiO_2$ = 0,05, $H_2O/SiO_2$ = 10,5, Reaktionstemperatur 90 °C, Kristallisationszeit 10 Tage. Die Keimmenge betrug 20 Gew.%, bezogen auf $SiO_2$ im geimpften Ansatz.

++ Das Keimbildungsgel hatte folgende Zusammensetzung:
1 $SiO_2$ • 0,39 NaOH • 0,05 TPA-Br • 10,5 $H_2O$
Seine Menge betrug 20 Gew.%, bezogen auf $SiO_2$ im geimpften Ansatz.

Die relative Kristallinität wurde durch Vergleich mit einer Referenzsubstanz, die nach der US-PS 3 702 886 hergestellt und röntgenographisch charakterisiert worden war, bestimmt.

## Patentansprüche

1. Verfahren zur Herstellung von kristallinen ZSM-5- und ZSM-11-Zeolithen mit einem Si/Al-Atomverhältnis von ≧ 10 durch hydrothermale Kristallisation aus einem Reaktionsansatz, der in wäßrig-alkalischem

Medium $SiO_2$ und $Al_2O_3$ bzw. deren hydratisierte Derivate oder Alkali-Silicate und -Aluminate, Kristallisationsbeschleuniger und quaternäre Ammoniumverbindungen, ein Alkylendiamin oder ein Gemisch aus Alkoholen mit Ammoniak enthält, dadurch gekennzeichnet, daß man dem Reaktionsansatz als Kristallisationsbeschleuniger ein gealtertes, aber noch roentgenamorphes Alumosilicat-Keimbildungsgel mit einem Si/Al-Atomverhältnis von ≧ 20 zusetzt.

**2.** Verfahren nach Anspruch 1, dadurch gekennzeichnet, daß man ein gealtertes Keimbildungsgel der Zusammensetzung (auf molarer Basis) $HO^-/SiO_2$ = 0,05 bis 1,0, quaternäre Ammoniumverbindung/$SiO_2$ = 0,0 bis 2,0, vorzugsweise 0,01 bis 2,0, $H_2O/SiO_2$ = 10 bis 1000, verwendet.

**3.** Verfahren nach Anspruch 1 oder 2, dadurch gekennzeichnet, daß die quaternäre Ammoniumverbindung ein Tetrapropyl-ammoniumsalz ($TPA^+$), vorzugsweise das Bromid, oder Tetrapropylammoniumhydroxid (TPAOH) darstellt.

**4.** Verfahren nach einem der Ansprüche 1 bis 3 , dadurch gekennzeichnet, daß das Keimbildungsgel bei atmosphärischem Druck im Bereich von 15 bis 100 ° C, vorzugsweise bei 20 bis 60 ° C, über 2 Stunden bis 100 Tage, vorzugsweise über 10 Stunden bis 50 Tage, gealtert worden ist.

**5.** Verfahren nach einem der Ansprüche 1 bis 4, dadurch gekennzeichnet, daß man das gealterte Keimbildungsgel Reaktionsansätzen mit folgender Zusammensetzung (auf molarer Basis) zusetzt: $SiO_2/Al_2O_3$ ≧ 5, $HO^-/SiO_2$ = $10^{-10}$ bis 1,0, quaternäre Ammoniumverbindung/$SiO_2$ = 0,01 bis 2,0, $H_2O/SiO_2$ = 0,7 bis 3000, Me/$SiO_2$ = 0,3 bis 3,0, wobei Me ein Alkali- oder Erdalkalimetall-Kation darstellt.

**6.** Verfahren nach einem der Ansprüche 1 bis 5, dadurch gekennzeichnet, daß man das gealterte Keimbildungsgel in Mengen von 4 bis 40 Gew.-%, vorzugsweise von 15 bis 25 Gew.-%, bezogen auf den $SiO_2$-Gehalt des fertigen Reaktionsansatzes, diesem zusetzt.

**7.** Verfahren nach einem der Ansprüche 1 bis 6, dadurch gekennzeichnet, daß man das gealterte Keimbildungsgel in einem Reaktionsansatz mit einer Temperatur von 40 bis 200 ° C anwendet.

**8.** Verfahren nach einem der Ansprüche 1 bis 7, dadurch gekennzeichnet, daß man dem Reaktionsansatz zusätzlich zu dem gealterten Keimbildungsgel ein Alkalifluorid, vorzugsweise Natriumfluorid, oder Ammoniumfluorid zusetzt, wobei das Molverhältnis $F^-/SiO_2$ = 0,4 bis 1,5 beträgt.

## Claims

**1.** Process for the preparation of crystalline ZSM-5 and ZSM-11 zeolite with an Si/Al atomic ratio of ≧ 10 by hydrothermal crystallization from a reaction mixture containing - in an aqueous alkaline medium - $SiO_2$ and $Al_2O_3$ (or their hydrated derivatives, or alkali metal silicates and alkali metal aluminates), crystallization accelerators and quaternary ammonium compounds, an alkylenediamine or a mixture of alcohols and ammonia, **characterized in that** the crystallization accelerator added to the reaction mixture is an aged by X-ray crystallographically still amorphous aluminosilicate nucleating gel with an Si/Al atomic ratio of ≧ 20.

**2.** Process as in Claim 1, characterized in that an aged nucleating gel is used that has the following composition, calculated on a molar basis: an $HO^-/SiO_2$ ratio of 0.05-1.0, a ratio between the quaternary ammonium compound and $SiO_2$ of 0.0-2.0 and preferably 0.01-2.0, and an $H_2O/SiO_2$ ratio of 10-1000.

**3.** Process as in Claim 1 or 2, characterized in that the quaternary ammonium compound is a tetrapropylammonium salt ($TPA^+$), and preferably the bromide, or else it is tetrapropylammonium hydroxide (TPAOH).

**4.** Process as in any one of Claims 1-3, characterized in that the nucleating gel has been aged under atmospheric pressure at 15-100 ° C and preferably at 20-60 ° C for 2 h to 100 days and preferably for 10 h to 50 days.

5. Process as in any one of Claims 1-4, characterized in that the aged nucleating gel is added to a reaction mixture that has the following composition, calculated on a molar basis: an $SiO_2/Al_2O_3$ ratio of ≧ 5, an $HO^-/SiO_2$ ratio of $10^{-10}$ to 1.0, a ratio between the quaternary ammonium compound and $SiO_2$ of 0.01-2.0, an $H_2O/SiO_2$ ratio of 0.7-3000 and an $M/SiO_2$ ratio of 0.3-3.0, where M represents an alkali metal cation or an alkaline earth metal cation.

6. Process as in any one of Claims 1-5, characterized in that the aged nucleating gel is added to the reaction mixture in an amount of 4-40 wt-% and preferably 15-25 wt-%, calculated on the $SiO_2$ content of the complete reaction mixture.

7. Process as in any one of Claims 1-6, characterized in that the aged nucleating gel is used in a reaction mixture at a temperature of 40-200° C.

8. Process as in any one of Claims 1-7, characterized in that, apart from the aged nucleating gel, one also adds to the reaction mixture an alkali metal fluoride, preferably sodium fluoride, or else ammonium fluoride, the $F^-/SiO_2$ molar ratio being 0.4-1.5.

**Revendications**

1. Procédé de fabrication de zéolithes cristallines du type ZSM-5 et ZSM-11, présentant un rapport atomique Si/Al de ≧ 10 par cristallisation hydrothermique à partir d'une charge réactionnelle qui contient, dans un milieu aqueux-alcalin $SiO_2$ et $Al_2O_3$ ou leurs dérivés hydratés ou des silicates et aluminates alcalins, un accélérateur de cristallisation et des composés d'ammonium quaternaire, une alkylène diamine ou un mélange d'alcools avec de l'ammoniaque, caractérisé par le fait qu'on ajoute à la charge réactionnelle, en tant qu'accélérateur de cristallisation, un gel de formation de germes de silicate d'aluminium vieilli, mais encore amorphe vis-à-vis des rayons X, présentant un rapport atomique Si/Al de ≧ 20.

2. Procédé selon la revendication 1, caractérisé par le fait qu'on utilise un gel de formation de germes vieilli ayant la composition (sur une base molaire) :
$HO^-/SiO_2$ = 0,05 à 1,0,
composé d'ammonium quaternaire/$SiO_2$ = 0,0 à 2,0, de préférence, 0,01 à 2,0,
$H_2O/SiO_2$ = 10 à 1000.

3. Procédé selon l'une des revendications 1 ou 2, caractérisé par le fait que le composé d'ammonium quaternaire est constitué par un sel de tétrapropyl ammonium ($TPA^+$), de préférence, le bromure, ou l'hydroxyde de tétrapropylammonium (TPAOH).

4. Procédé selon l'une quelconque des revendications 1 à 3, caractérisé par le fait que le gel de formation de germes a été vieilli à la pression atmosphérique, dans la plage de 15 à 100° C, de préférence, à une température de 20 à 60° C, en l'espace de 2 heures à 100 jours, de façon préférée, en l'espace de 10 heures à 50 jours.

5. Procédé selon l'une quelconque des revendications 1 à 4, caractérisé par le fait qu'on ajoute le gel de formation de germes vieilli à des charges réactionnelles ayant la composition suivante (sur une base molaire) :
$SiO_2/Al_2O_3$ ≧ 5,
$HO^-/SiO_2$ = $10^{-10}$ à 1,0,
composé d'ammonium quaternaire/$SiO_2$ = 0,01 à 2,0,
$H_2O/SiO_2$ = 0,7 à 3000,
$Me/SiO_2$ = 0,3 à 3,0,
où Me représente un cation de métal alcalin ou alcalinoterreux.

6. Procédé selon l'une quelconque des revendications 1 à 5, caractérisé par le fait qu'on ajoute le gel de formation de germes vieilli dans des quantités de 4 à 40% en poids, de préférence, de 15 à 25% en poids, par rapport à la teneur en $SiO_2$ de la charge réactionnelle préparée.

7. Procédé selon l'une quelconque des revendications 1 à 6, caractérisé par le fait qu'on utilise le gel de

formation de germes vieilli dans une charge réactionnelle à une température de 40 à 200 °C.

8. Procédé selon l'une quelconque des revendications 1 à 7, caractérisé par le fait qu'on ajoute à la charge réactionnelle, en plus du gel de formation de germes vieilli, un fluorure alcalin, de préférence, le fluorure de sodium ou le fluorure d'ammonium, le rapport molaire $F^-/SiO_2$ = 0,4 à 1,5.

Abbildung 1

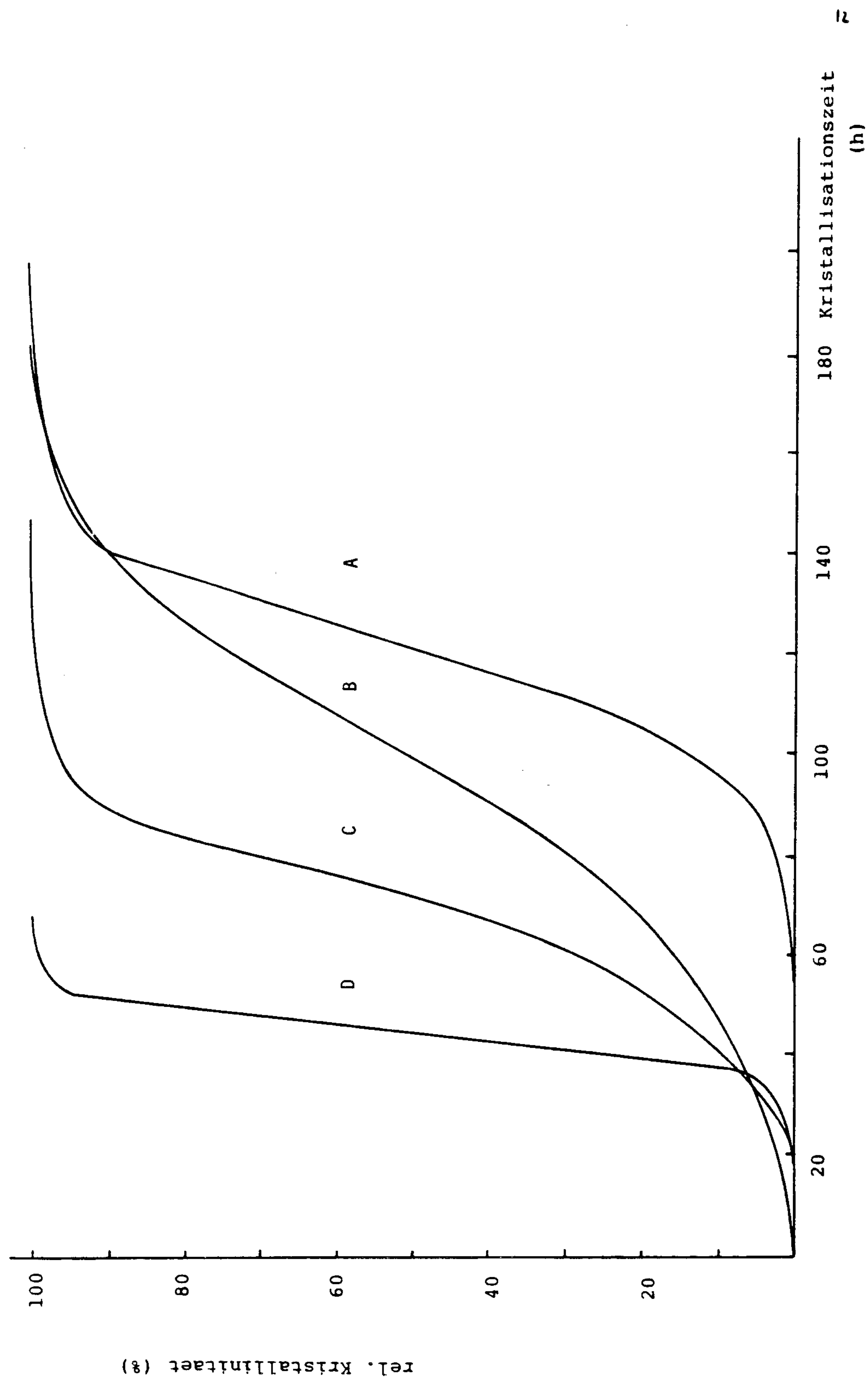
100
80
60
40
20
rel. Kristallinitaet (%)
20
60
100
140
180
Kristallisationszeit (h)
A
B
C
D